# EUROPEAN PATENT APPLICATION

(11) **EP 4 033 411 A1**
(43) Date of publication of application: **27.07.2022**
(21) Application number: 21153512.5
(22) Date of filing: 26.01.2021
(51) Int. Cl.: G06N 3/04, G06N 3/08, G06N 20/00

(54) **SYNTHESIZING MOBILITY TRACES**

(71) Applicant: MOSTLY AI Solutions MP GmbH, 1010 Wien (AT)
(72) Inventor: KALCHER, Klaudius, 1010 Wien (AT); PLATZER, Michael, 1010 Wien (AT); SOUKUP, Daniel, 1010 Wien (AT)
(74) Representative: SONN Patentanwälte OG

(57) **Abstract**

Methods for training a first machine learning model (18), which is a sequential generative model, and a second machine learning model (24), which is a sequence-to-sequence model, with a training data set (1) comprising a plurality (16) of specific routes (3) and with a plurality (17) of generic routes (8) mapped from the specific routes (3). And a method for synthesizing mobility traces comprising: generating a plurality (29) of synthetic generic routes (22), each synthetic generic route (22) comprising an ordered sequence of synthetic generic positions (23), and generating a plurality (30) of synthetic specific routes (27) using the plurality (29) of synthetic generic routes (22), wherein each synthetic specific route (27) corresponds to a synthetic generic route (22) and comprises a corresponding ordered sequence of synthetic specific positions (28), wherein the synthetic specific positions (28) have a finer granularity than the synthetic generic positions (23).

## Description

The present invention concerns the generation of synthetic mobility traces and means for synthetization of mobility traces from measured mobility traces.

A mobility trace is essentially a representation of a movement in the physical world. For example, a mobility trace may represent the movement of a subject (e.g. a pedestrian, a cyclist or a car) between an initial location and a final location, which may be the same as or different from the initial location. The mobility trace includes information on where the subject was located after departing from the initial location and before arriving at the final location. Typically, a mobility trace can be implemented as a route comprising an ordered sequence of at least three positions. The first and last positions represent the initial and final location respectively and the position or positions in between represent the location of the subject between departure and arrival. The order of the sequence represents the chronology in which the movement traverses the positions. As such, the order is the most general representation of a time-series. Optionally, absolute timestamps or relative durations can be associated with some or all positions. In case all positions have an associated time information, this may define the order of the sequence irrespective of other types of data structures or storage formats.

Each position can be according to a horizontal position representation, for example including a pair of numbers defining a geographic latitude and longitude respectively. The present disclosure is not limited to a particular position representation and extends also to other position representations, for example geohash. It also applies to relative positions, for example in a local coordinate system covering a limited area or region of interest.

Mobility traces pose a particular challenge for data synthetization because the statistical patterns observed are entirely different than for more typical numeric data fields.

They are tied to patterns like geographic features and traffic flows that are not directly observed in the data. A method to synthesize this type of data without relying on external, complementary data (map data etc.) may try to extract the traces of these patterns from actual mobility data, i.e. observed mobility traces or - in other words - sequences of measured positions of actual subjects. Hence, such a method will be capable of determining a particular representation of observable, real-world conditions. It is thus solving a technical problem.

US 2020/0012902 A1 concerns the generation of synthetic time-series data generally, listing time-series data with dimensions corresponding to longitude, latitude, cancer incidence, population density, air quality, and water quality as examples. It discloses the segmenting of training data in general and the use of a trained sequence-to-sequence model for generating synthetic segments. The possibility of clustering training data is only mentioned as a general remark. Overall, this publication provides a high-level broad and general disclosure of various possible tools for synthesizing time-series data, but it lacks detailed and workable teaching related in particular to the application of synthesizing mobility traces. Specifically, there is no disclosure of a two-dimensional clustering or of a combination of clustering with any particular model architecture like RNNs or sequence-to-sequence models; and notably there is no teaching for training from or generating mobility traces.

Another related publication is US 2017/0262773 A1. This document also concerns the generation of synthetic data and includes an example concerning particularly location data, namely the New York Taxi Data Set. However, this data set is limited to pairs of locations representing the start and end point of trips. There is no teaching with regard to the problem of generating intermediary locations. Thus, there is no workable disclosure for generating synthetic mobility traces.

A detailed disclosure of the generation of synthetic time-series data can be found in the article "eCommerceGAN: A Generative Adversarial Network for E-commerce" by Kumar et al (Kumar, A., Biswas, A., & Sanyal, S. (2018); arXiv preprint arXiv:1801.03244). They describe a Generative Adversarial Network (GAN) for orders made on e-commerce websites. The article discloses a sequential generative model, which in principle can also be used for generating other types of synthetic time-serious data, such as synthetic mobility traces. In particular, the model-specific parameters, training strategies and conditions apply irrespective of the type of data and the present application refers to this and similar publications for implementation particularities regarding the general model and the general training methodology.

However, models and approaches known in the prior art turn out to have less than desirable performance when applied to the problem of generating synthetic mobility traces. Specifically, the synthetic mobility traces generated by the prior art methods tend to overrate the importance of traces segments along common paths. Put simply, e.g. regarding mobility traces of cars, prior art models tend to generate movement profiles that stay on the highway. They seem to overlook that the highway is almost never the purpose of the movement and they underestimate start locations and goal locations distant from such common paths, effectively producing unrealistic - and hence low-quality - mobility traces.

It is an object of the present invention to provide a method for generating more realistic synthetic mobility traces.

The invention proposes a computer-implemented method for synthesizing mobility traces based on a staged approach involving generation of generic routes during a first stage and a generation of specific routes during a second stage. One or both stages may be implemented by using machine learning models trained on actual (i.e. measured) mobility traces of actual subjects. Hence, within the scope of the invention are a computer-implemented method for training a first machine learning model - to be used during the first stage - as well as a computer-implemented method for training a second machine learning model - to be used during the second stage (or possibly any additional intermediary stage as described further below).

In particular, the invention proposes a computer-implemented method for training a first machine learning model comprising:
receiving a training data set comprising a plurality of specific routes, each specific route comprising an ordered sequence of specific positions,
mapping the plurality of specific routes to a corresponding plurality of generic routes, wherein each specific position is mapped to a representation having a coarser granularity forming a corresponding generic position,
training the first machine learning model, which is a sequential generative model, with the plurality of generic routes.

Each specific route of the training data set corresponds to an actual mobility trace of an actual subject. The specific positions are thus recorded or measured positions captured during an actual movement of that subject, for example using a positioning technology, such as the global positioning system (GPS) or similar satellite-based systems or such as an indoor positioning system based on short-range radio signals (Wi-Fi or Bluetooth), acoustic signals or optical positioning. The present invention is not limited to any particular positioning technology.

The invention is based on the recognition that a first machine learning model, which is a sequential generative model, is more likely to learn and estimate the importance of the initial and final position of individual routes more realistically when the information content of the positions in between is reduced. This reduction in information is achieved by mapping each specific position to a generic position having a coarser granularity. Consequently, the specific positions have finer granularity, meaning that they are more exact or more precise. Each specific route has a corresponding generic route. In an embodiment of the present disclosure, the generic route comprises the same number of (generic) positions as the number of (specific) positions of the specific route. That means that in general the generic route may comprise the same position possibly multiple times, i.e. a repetition of a generic position is possible to represent different specific positions that are close to each other.

The mapping may be performed in one go (one batch) or on demand, when the generic route is needed for training. The training progress and the mapping progress may run in parallel and be interleaved. In general, also the receiving, mapping and training tasks may run in parallel and interleaved. Effectively the coarser granularity forces the first machine learning model to learn a view "from afar". As the distinction of close by positions is reduced or even removed, more distant positions gain importance. This means that individual high-level mobility patterns gain importance and their effect on the training of the first machine learning model is increased. Notably, these high-level mobility patterns may include not only an initial position and a final position (or coarse representations thereof), but also high-level trip information, i.e. one or more generic positions along the path taken between a generic initial position and a generic final position. On the other hand, specific positions recorded by many different subjects and belonging to several different mobility traces will be represented as a single position and the model will not learn individual characteristics of those high-frequency positions, leaving more capacity for low-frequency positions, to which the initial and final positions typically belong. The condition to terminate the training may be a stagnating validation loss. The output of the training method is a trained first machine learning model comprising a particular architecture and associated weights.

The methods in this disclosure are thus capable of determining a particular representation of observable, real-world conditions, as mentioned in the introduction above. Such particular representations are the configuration of a first trained machine learning model, i.e. obtained by training the first machine learning model, and the configuration of a second trained machine learning model, i.e. obtained by training the second machine learning model as described below. Those configurations are essentially measurements of the mobility of a group or "ensemble" of subjects. The disclosed methods can be understood as processing an ensemble of mobility traces, removing subject-specific individual properties and maintaining ensemble (statistical) properties.

Optionally, at least one specific route and/or at least one specific position comprises auxiliary information including one or more from a group comprising a date of the route, a time at one or more specific positions and a mode of transportation, wherein the method may comprise directly mapping the auxiliary information to the corresponding generic route and/or the corresponding generic position respectively and using it for the training of the first machine learning model. The first machine learning model used during the first stage is suitable for learning connections between such information and the generic route. For example, mobility traces related to commutes may have their likely initial positions and file positions dependent on the time of day. The mode of transportation is a parameter that typically changes rarely within the same mobility trace, making it suitable for learning by the first machine learning model. Training the first machine learning model with the auxiliary information enables it to generate synthetic auxiliary information (see below), which then can be used as an input for a second trained machine learning model. During generation this enables the second trained machine learning model to employ the - in this case given - synthetic auxiliary information for making decisions for generating a synthetic specific route. For example, when as part of the synthetic auxiliary information the mode of transportation is generated by the first trained machine learning model and provided as an input to the second trained machine learning model, the second trained machine learning model can more easily decide that the synthetic specific route respects that mode of transportation (e.g. whether the specific route needs to follow the highway or the railway).

Moreover, the invention proposes a computer-implemented method for training a second machine learning model comprising:
receiving a training data set comprising a plurality of specific routes, each specific route comprising an ordered sequence of specific positions,
mapping the plurality of specific routes to a corresponding plurality of generic routes, wherein each specific position is mapped to a representation having a coarser granularity forming a corresponding generic position,
training the second machine learning model, which is a sequence-to-sequence model, with the generic routes as input sequences and the corresponding specific routes as output sequences.

The description of the training data set and the routes described above applies to this method analogously. In contrast to the method for training the first machine learning model, this method for training the second machine learning model concerns a different type of model, namely a sequence-two-sequence model. Due to the fundamentally different model architecture, also the training input differs: the second machine learning model is essentially trained to translate existing generic routes into corresponding specific routes. This means effectively it learns to distribute the synthetic specific positions in an area surrounding the provided synthetic generic positions. In doing so, the model learns and takes into account the context of the entire route, e.g. it can learn that specific positions around the same generic position are distributed differently depending on different preceding and/or subsequent generic positions. The condition to terminate the training may be a converging loss. The output of the training method is a trained second machine learning model comprising a particular architecture and associated weights.

Optionally, the sequence-to-sequence model (i.e. the sequence-to-sequence deep learning model) is a translation model. Examples of suitable models that can be used in the present application are Transformer Networks such as those disclosed in the article "Attention Is All You Need" by Vaswani et al. (In: Advances in neural information processing systems. 2017. S. 5998-6008; arXiv preprint: 1706.03762), in particular the model "Transformer (big)" discussed in section 6.1 of that article in the context of machine translations.

The methods disclosed above may optionally be combined into one method, wherein the same training data set and the same plurality of generic routes are used for training the first machine learning model and the second machine learning model. In this case, the mapping from specific positions and routes to generic positions and routes can be reused and ideally needs to be performed only once for each training data set.

For example, the representation for mapping specific positions to generic positions uses hierarchical binning. Usually, such representations include position information at different levels of granularity, corresponding to 2 or more levels of hierarchy. In particular, the QuadTiles representation can be used. In such a representation, the length of the value typically correlates with the granularity. Thus, different levels of granularity can be accessed by taking segments of the same provided values. For the QuadTiles representation, a granularity between 14 and 20 letters (i.e. levels of hierarchy) of the most common geo-data binning convention can be used in the present method. When using hierarchical binning, different levels of the binning hierarchy may be tested for training the first and second machine learning model and the performance may be evaluated to optimize the level of granularity of the generic positions. During the process, the mapping from specific positions to generic positions is facilitated by the hierarchical nature of the generic representations.

Alternatively, the representation for mapping specific positions to generic positions may use clustering the specific positions.

For example, k-means clustering may be performed, e.g. determining 5000 clusters. One effect of this approach is that high-frequency positions maintain a more accurate generic representation, thus ensuring that common paths shared by many mobility traces are synthesized more accurately. When the purpose of the synthetisation is to remove personal information from the data set, this approach affords more realistic synthetic mobility traces without compromising the anonymisation due to the small individual information contained in the position along the common paths.

Generally, other representations may also be used, e.g. a fixed grid representation.

When the term "computer-implemented method" is used in the present disclosure, it refers to a method being performed on one or more computers, on a system implemented by one or more computers, in a computer network connecting two or more computers, or generally on a programmable apparatus or system, wherein at least one step of the method is performed by means of a computer.

While the methods described above are described as being computer-implemented, the scope of the disclosure is generally independent of an actual implementation and it is understood by the skilled person that there are also other ways of implementing or using the methods according to the present invention.

Finally, the invention proposes a computer-implemented method for synthesizing mobility traces, comprising:
generating a plurality of synthetic generic routes, each synthetic generic route comprising an ordered sequence of synthetic generic positions, and
generating a plurality of synthetic specific routes using the plurality of synthetic generic routes,
wherein each synthetic specific route corresponds to a synthetic generic route and comprises a corresponding ordered sequence of synthetic specific positions,
wherein the synthetic specific positions have a finer granularity than the synthetic generic positions.

Optionally, within this method, generating the plurality of synthetic specific routes using the plurality of synthetic generic routes may comprise:
generating a plurality of synthetic intermediary routes using the plurality of synthetic generic routes, and
generating the plurality of synthetic specific routes using the plurality of synthetic intermediary routes,
wherein each synthetic intermediary route corresponds to a synthetic generic route and comprises a corresponding ordered sequence of synthetic intermediary positions,
wherein the synthetic intermediary positions of the synthetic intermediary routes have a finer granularity than the synthetic generic positions and a coarser granularity than the synthetic specific positions.

The generation of the synthetic intermediary routes may be performed similarly to the generation of the synthetic specific routes and with a similar (third) machine learning model. The third machine learning model would be trained similarly to the second machine learning model, albeit replacing the specific positions with intermediary positions derived from the training data set by mapping the specific positions accordingly. In turn, the second machine learning model that can be used to generate the specific positions take the mapped intermediary positions as a training input instead of the mapped generic positions. The skilled person will recognise that further layers of intermediate generalisation of the positions similar to the intermediate positions and synthetic intermediary positions can be introduced recursively within the scope of the present disclosure.

Generating the plurality of synthetic generic routes may for example be performed using a first trained machine learning model, which is a sequential generative model. The first trained machine learning model can be obtained according to the method described above.

Optionally, generating the plurality of synthetic generic routes may comprise generating synthetic auxiliary information in association with at least one synthetic generic route and/or with at least one synthetic generic position, the synthetic auxiliary information including one or more from a group comprising a date of the route, a time at a synthetic generic position (in general, multiple instances of the same generic position may be associated with different times) and a mode of transportation, wherein the method comprises directly mapping the synthetic auxiliary information to the corresponding synthetic specific route and/or the corresponding synthetic specific position respectively.

Generating the plurality of synthetic specific routes may optionally be performed using a second trained machine learning model, which is a sequence-to-sequence model. The second trained machine learning model can be obtained according to the method described above.

The present disclosure also extends to a data processing apparatus comprising means for carrying out the steps of any of the methods described above and variations thereof.

The present disclosure also extends to a computer program comprising instructions to cause the data processing apparatus as defined above to execute the steps of any of the methods described further above and variations thereof.

The present disclosure also extends to a computer-readable medium having stored thereon the computer program as defined above.

Finally, the present disclosure also extends to synthetic data produced by the disclosed method; and, specifically, also to a pair of data sets comprising a training data set as described above as well as a set of synthetic data derived therefrom.

Referring now to the drawings, wherein the figures are for purposes of illustrating the present invention and not for purposes of limiting the same:
fig. 1 shows a diagram of the data model of a training data set;
fig. 2a shows a diagram of the data model of a location representation according to a first embodiment using clustering;
fig. 2b shows a diagram of the data model of a location representation according to a second embodiment using hierarchical binning;
fig. 3 schematically shows a geometric representation of a specific route representing a mobility trace;
fig. 4 schematically shows a tabular representation of the specific route of fig. 3;
fig. 5a schematically shows a geometric representation of a generic route corresponding to the specific route of fig. 3 with a mapping based on clustering;
fig. 6a schematically shows a tabular representation of the generic route of fig. 5a;

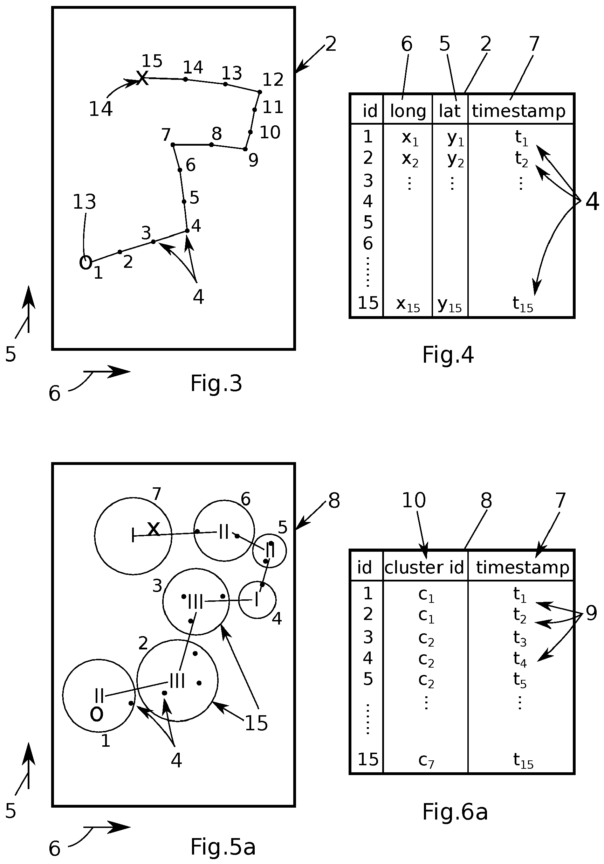

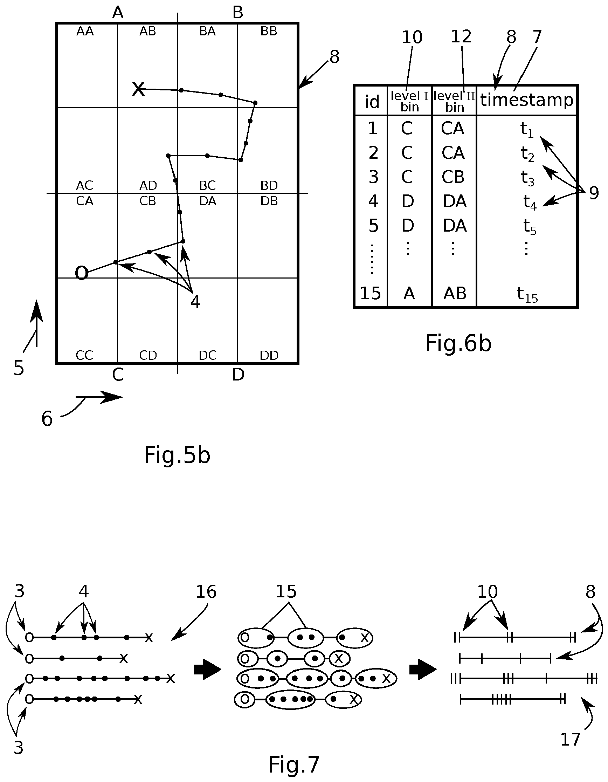

fig. 5b schematically shows a geometric representation of a generic route corresponding to the specific route of fig. 3 with a mapping based on hierarchical binning;
fig. 6b schematically shows a tabular representation of the generic route of fig. 5b;
fig. 7 shows an illustration of the mapping of a plurality of specific routes to a plurality of generic routes;

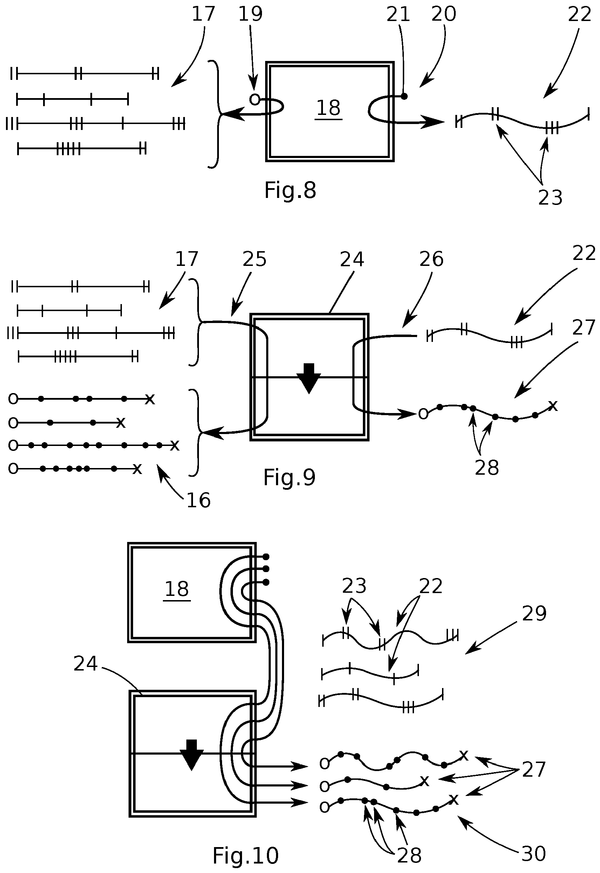

fig. 8 shows an illustration of the functions of a first machine learning model;
fig. 9 shows an illustration of the functions of a second machine learning model;
fig. 10 shows an illustration of a first embodiment of a method for generating a plurality of synthetic specific routes using the models of fig. 8 and fig. 9;

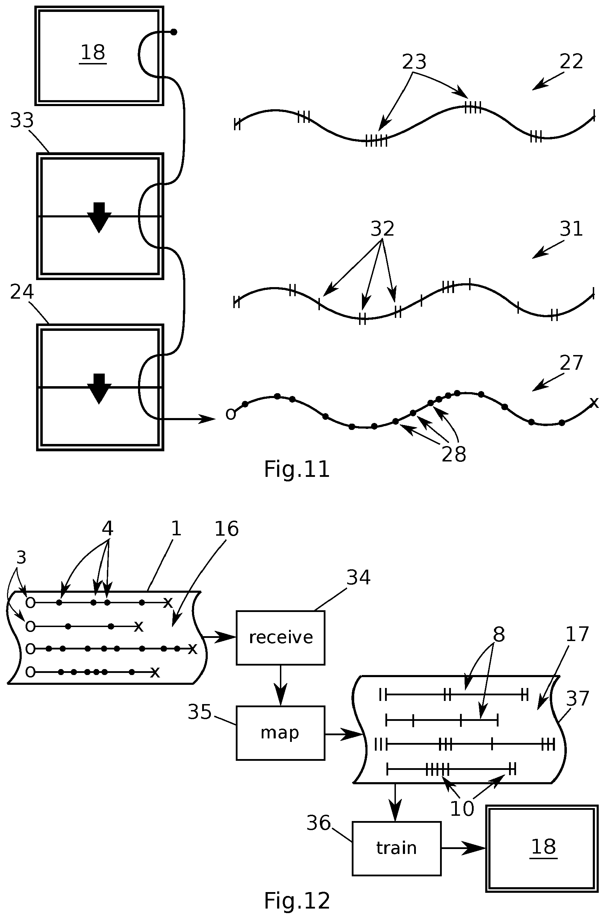

fig. 11 shows an illustration of a second embodiment of a method for generating a plurality of synthetic specific routes using three machine learning models;
fig. 12 schematically shows a flow diagram of the training of the first machine learning model according to fig. 8;

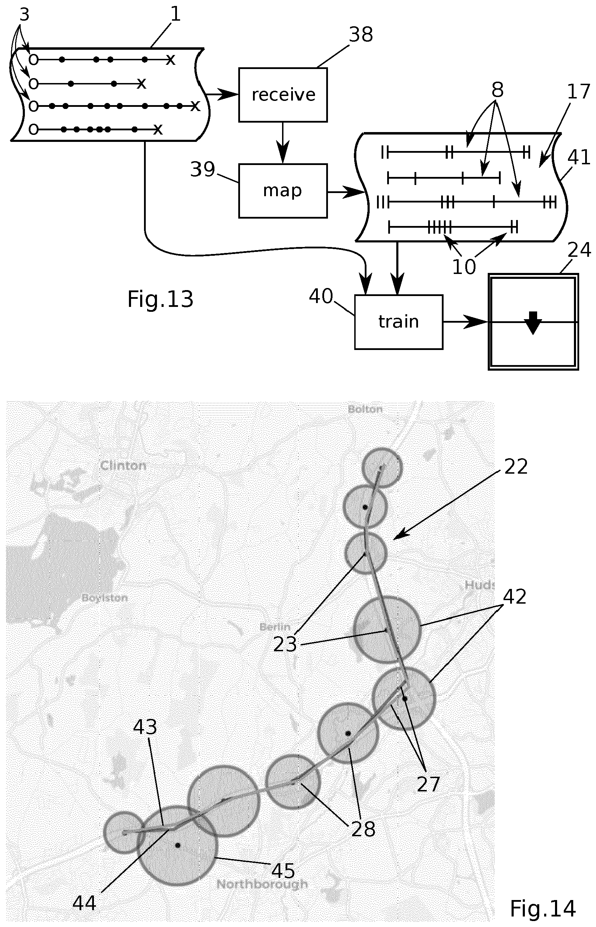

fig. 13 schematically shows a flow diagram of the training of the second machine learning model according to fig. 9;
fig. 14 shows a map with an illustration of one synthetic generic route and two different, alternative specific routes generated from said generic route;

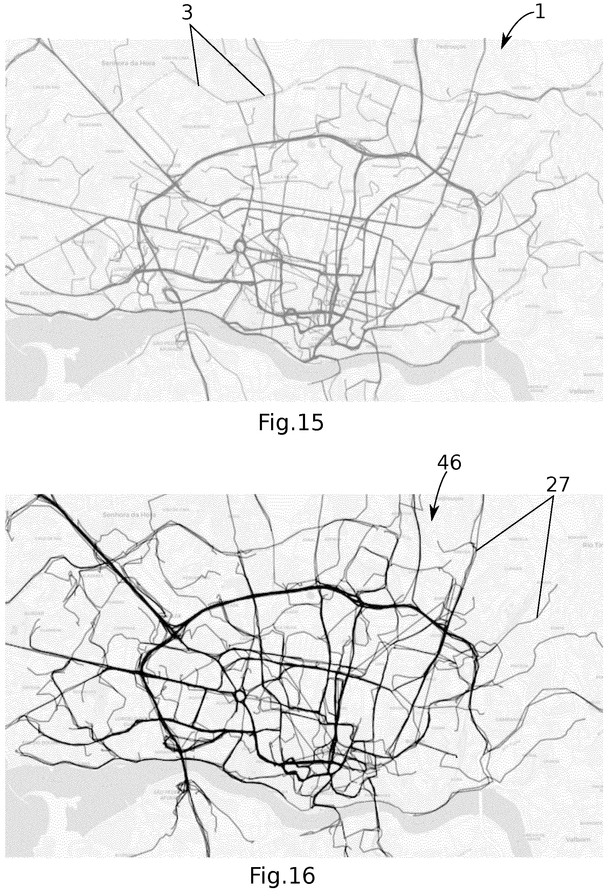

fig. 15 shows an illustration of parts of an exemplary training data set comprising a plurality of representations of measured mobility traces; and
fig. 16 shows an illustration similar to fig. 15 for an exemplary plurality of synthetic specific routes generated according to the disclosed method.

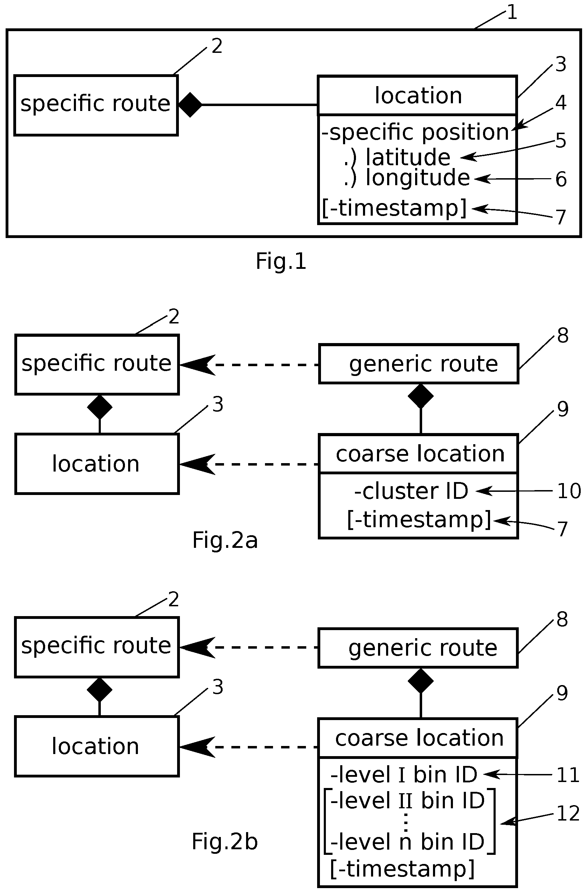

The diagram shown in fig. 1 is a simple class diagram in the Unified Modelling Language (UML), illustrating the data model of a training data set 1 according to the present disclosure. The training data set 1 comprises a plurality of representations of individual mobility traces. Each such representation according to the present disclosure can be a specific route 2. Each specific route 2 comprises a plurality of locations 3 of the subject of the respective mobility trace. Each such location 3 comprises at least a specific position 4, in this example including parameters for a geographic latitude 5 and a geographic longitude 6, as well as an optional timestamp 7 associated with the specific position 4.

Fig. 2a shows a similar class diagram, only for a first embodiment of a generic route 8, which - different than the specific route 2 - comprises a plurality of coarse locations 9 as representations of the locations 3 of the specific group 2 corresponding to the particular generic route 8. To obtain a course location 9, that specific position 4 is mapped to the closest cluster of a collection of clusters determined for example by clustering all specific positions 4 of the data set 1. The closest cluster of the individual coarse location 9 is identified by a generic position 10 represented by a cluster ID. The optional timestamp 7 is copied from the location 3 to the corresponding coarse location 8.

Fig. 2b shows a class diagram similar to fig. 2a, only for a second embodiment of a generic route 8. In this embodiment, to obtain a course location 9, the specific position 4 of the corresponding location 3 is mapped to a bin (or several bins at different hierarchical levels) according to a hierarchical binning. The bin is identified by a generic position 11 represented by a bin ID. Optionally, the coarse location 9 may include additional generic positions 12 represented by bin IDs at different hierarchical levels of the hierarchical binning.

Fig. 3 schematically shows a geometric representation of a specific route 2 representing a mobility trace. The specific route 2 comprises a sequence of two-dimensional specific positions 4 in a horizontal coordinate system of longitude 6 and latitude 5. The specific positions 4 are connected between an initial position 13 and a final position 14. Indicated next to each specific position 4 is a position ID for reference to the tabular representation in fig. 4. The tabular representation illustrates that the specific route 2 can be represented by a table, wherein each row represents a specific position 4 and the columns are according to the data model illustrated in fig. 1 in addition to an ID for reference to fig. 3. Thus, there are columns for longitude 6, latitude 5 and a timestamp 7 for example.

Fig. 5a schematically shows a geometric representation of a generic route 8 corresponding to the specific route 2 of fig. 3. The specific positions 4 are mapped to clusters 15 indicated by larger circles around a cluster centre. The clusters 15 are connected to indicate the ordered sequence representing the generic route 8. The number of specific positions 4 mapped to each cluster 15 is indicated by a tally in each cluster centre. Indicated next to each cluster 15 is a cluster ID for reference to the generic positions 10 in the tabular representation in fig. 6a. The tabular representation illustrates that the generic route 8 can be represented by a table, wherein each row represents a coarse location 9 according to the data model of fig. 2a. The generic position 10 of each coarse location 9 corresponds to a specific position 4 and hence to a row in the tabular representation of fig. 4. The generic position 10 is indicated in terms of a cluster ID of the cluster 15, to which the corresponding specific position 4 maps. The positions and sizes of the clusters 15 can be determined by a clustering algorithm applied to all specific positions of the data set 1. One example for a suitable clustering algorithm is k-means clustering with the parameter suitable for the size of the data set, for example k=5000.

Fig. 5b schematically shows a geometric representation of a generic route 8 corresponding to the specific route of fig. 3 with a mapping based on hierarchical binning. The figure schematically shows a minimal such binning with two levels of hierarchy conceptually similar to QuadTiles binning, but with only two characters. The specific positions 4 are mapped to level I bins A, B, C, D and to level II bins AA, AB ... DD as indicated in fig. 5b. Fig. 6b shows a tabular representation of the generic route 8 according to the data model fig. 2b, wherein the columns holding the generic positions 10 store a level I bin ID in each row representing a coarse location 9 corresponding to a location 3 with a specific position 4 and hence to a row in the tabular representation of fig. 4. The hierarchical binning is predefined before creating the mapping of the specific positions 4 to the generic positions 10.

Fig. 7 introduces a simplified graphical representation to illustrate the mapping of a plurality 16 of (e.g. four) specific routes 3 to a plurality 17 of (e.g. correspondingly also four) generic routes 8 according to the example shown in fig. 5a. Each specific route 3 is indicated by a horizontal line of individual length and with dots at different locations to indicate the specific positions 4 along the specific route 3. In a first step, the specific positions 4 are associated to the clusters 15 indicated as circles around the specific positions 4. In a second step, the specific positions 4 are replaced by the generic positions 10 indicated by the tallies of fig. 5a. The generic positions 10 are connected by a line to illustrate the ordered sequence making up the generic route 8. In the following figures, only the first graphical representation of specific routes 3 and the last graphical representation of generic routes 8 will be used to illustrate the function of the machine learning models.

Fig. 8 shows an illustration of the functions of a first machine learning model 18, which is a sequential generative model. On the left side of the model 18, the training process is schematically illustrated: a plurality 17 of generic routes 8 is used e.g. as a feedback on the training process 19 refining the generic routes generated by the first machine learning model 18. On the right side of the model 18, a generation process 20 is illustrated. From an initial state 21 the model 18 generates a synthetic generic route 22 comprising a plurality of synthetic generic positions 23. To illustrate the synthetic nature of this route, the synthetic generic route 22 is indicated as a waived line as opposed to a straight line for actual generic routes 8 obtained from actual specific routes 3 of the training data set 1. The synthetic generic positions 23 of the synthetic generic route 22 are indicated similar to the generic positions 10 of the generic routes 8. In this example, the synthetic generic route 22 extends through four different clusters 15, each comprising a known count of - yet unknown - synthetic specific positions.

Fig. 9 shows a similar illustration of the functions of a second machine learning model 24, which is a sequence-to-sequence model as indicated by the different internal structure compared to the first machine learning model 18. Again, on the left side of the model 24, the training process 25 is schematically illustrated: a plurality 17 of generic routes 8 is used as training input and a plurality 16 of specific routes 3 is used as expected training output to train the second machine learning model 24. On the right side of the model 24, a generation process 26 is illustrated. The trained second machine learning model 24 translates a given input sequence, e.g. the synthetic generic route 22 according to fig. 8, into a synthetic specific route 27. As above, to illustrate the synthetic nature of this route, the synthetic specific route 27 is indicated as a waived line as opposed to a straight line for the actual specific routes 3 of the training data set 1. The synthetic specific positions 28 are indicated similar to the specific positions 4 of the specific routes 3. In this example, synthetic specific positions 28 are generated according to the positions and occurrences of the synthetic generic positions 23.

Fig. 10 schematically illustrates a first embodiment of a method for synthesizing mobility traces. The method comprises generating a plurality 29 of synthetic generic routes 22, and - based thereon - generating a plurality 30 of synthetic specific routes 27. Each synthetic generic route 22 is generated to comprise an ordered sequence of synthetic generic positions 23. The synthetic generic routes 22 are generated using a first trained machine learning model 18, which is a sequential generative model that has been trained, e.g. according the method described in connection with fig. 12 described below. The first trained machine learning model 18 in this embodiment is trained to generate synthetic generic routes 22 comprising synthetic auxiliary information including a date of the route, a time at each generic position, a mode of transportation, and general information about the subject. The synthetic auxiliary information of the route is generated either for the trip as a whole (typically date, or demographic information about the person making the trip), or on a time-step by time-step basis (typically time stamp, but also mode of transportation if it can vary across the trip).

The synthetic specific routes 27 are generated using the plurality of synthetic generic routes 29. More particularly, each synthetic specific route 27 is generated to correspond to a synthetic generic route 22. Specifically, it comprises a corresponding ordered sequence of synthetic specific positions 28. The synthetic specific routes 27 are generated using a second trained machine learning model 24, which is a sequence-to-sequence model that has been trained, e.g. according to the method described in connection with fig. 13 described below. The synthetic specific positions 28 have a finer granularity than the synthetic generic positions 23. The synthetic auxiliary information is directly mapped or copied from the synthetic generic route 22 to the corresponding synthetic specific route 27 and from the synthetic generic position 23 to the corresponding synthetic specific position 28 respectively.

The sequence-to-sequence deep learning model used as the second trained machine learning model 24 is used to create, for each generic route 22 (e.g. cluster-level trip), a specific route 27 (e.g. a trip at a finer granularity). To this end, a model similar to a text translation model can be used, using a generic route as input and "translating" it into a sequence of fine granularity, i.e. a specific route. What constitutes the fine granularity can depend on the original data and the coarsening method used. For low-resolution QuadTiles representations, a higher-resolution QuadTile could be used; for a cluster center representation, the deviation from the cluster center in latitude and longitude can be used to recreate a location at the original resolution. Alternatively to a text translation model, it is also possible to use another type of modifying sequence-to-sequence model, most notably style transfer models. The sequence-to-sequence model will also use as additional inputs all auxiliary information that was included at cluster level as mentioned above (date, timestamp, mode of transportation).

The generation of the synthetic generic routes 22 may be performed in a first stage and the generation of the synthetic specific routes 27 may be performed in a second stage. In other words, the synthetic generic routes 22 generated during the first stage are converted into synthetic specific routes 27 during the second stage. The synthetic specific routes 27 are the synthesised mobility traces. Hence, the synthetic generic routes 22 are an intermediate product of the present method for synthesising mobility traces.

The first trained machine learning model 18 may be initialised with a constant parameter or a random vector according to the particular model employed. For example, the initialization of a generation (such as disclosed by Kumar et al) may be achieved with a random noise vector as input. If desired, optional additional input parameters may be used to predefine certain dimensions (e.g. in Kumar et al a representation of a product that shall be the subject of the generated transaction).

Fig. 11 schematically illustrates a second embodiment of the method for synthesising mobility traces. In this embodiment, compared to the first embodiment shown in fig. 10, the second stage is split into two stages, resulting in a total of three stages. In particular, this embodiment comprises: generating a plurality of synthetic intermediary routes 31 using the plurality of synthetic generic routes 22 (only one pass is illustrated for simplicity), and generating the plurality of synthetic specific routes 27 using the plurality of synthetic intermediary routes 31. Each synthetic intermediary route 31 corresponds to a synthetic generic route 22 and comprises a corresponding ordered sequence of synthetic intermediary positions 32. The synthetic intermediary positions 32 of the synthetic intermediary routes 31 have a finer granularity than the synthetic generic positions 23 and a coarser granularity than the synthetic specific positions 28. In other words, the relatively coarse granularity of the synthetic generic routes 22 is refined in one or more stages to finally obtain the synthetic specific routes 27. The generation of the plurality of synthetic intermediary routes 31 can be performed using a trained intermediary sequence-to-sequence machine learning model 33 similar to the second machine learning model 24, although naturally trained with representations and mappings based on the training data set, i.e. mapping the actual specific routes to actual generic rules and also actual intermediary routes, wherein the latter two are used for training the intermediary sequence-to-sequence machine learning model 33.

Since the first stage uses a first trained machine learning model 18 and the (at least one) second stage uses the second trained machine learning model 24, the disclosed general approach uses a hierarchical model consisting of at least two machine learning models 18, 24 to better handle complexity of synthesising realistic mobility traces at multiple levels.

Fig. 12 shows a method for training a first machine learning model 18. The method comprises receiving 34 a training data set 1, applying a mapping 35 at least to parts of the training data set 1, and training 36 the first machine learning model 18 using the results 37 from the mapping. More in detail, the training data set 1 comprises a plurality 16 of specific routes 3. Each specific route 3 comprises an ordered sequence of specific positions 4. Each specific position 4 is a representation of an actual geographic or relative position of a subject moving along the corresponding mobility trace.

The mapping 35 maps the plurality 16 of specific routes 3 to a corresponding plurality 17 of generic routes 8. Specifically, each specific position 4 is mapped to a representation having a coarser granularity forming a corresponding generic position 10. In other words, each generic route 8 is a less accurate (regarding position information) version of a corresponding specific route 3. In one embodiment, illustrated by figures 2b, 5b and 6b, the representation for mapping specific positions 4 to generic positions 10 uses hierarchical binning, for example QuadTiles. In an alternative embodiment, illustrated by figures 2a, 5a and 6a, the representation for mapping specific positions 4 to generic positions 10 uses clustering the specific positions, for example applying a k-means clustering algorithm. Hence, the purpose of the mapping step 35 is to predict high-level trajectories or traces using a coarse location representation. For this, locations are mapped to this coarser representation. This can be either a low-resolution QuadTile representation (for example, 16 characters), which is a simple transformation based on latitude and longitude, or a representation informed by the importance of specific locations based on frequency of visits. The latter are computed by applying a clustering algorithm (e.g. k-means) on all locations observed in the data 1, so that the number of clusters 15 is in an order of magnitude that is easier to handle for a first coarse trip-generation model (e.g. 5000 cluster centers for the city of Porto in the Porto taxi data set example shown in fig. 15), and then mapping 35 every location in the data 1 to its nearest cluster center. In the present disclosure, we refer to data at this coarser granularity ("cluster level") as the "generic" data/routes/positions regardless of the method used to map data from fine to coarse granularity.

The first machine learning model 18 is a sequential generative model. This model is trained with the plurality 17 of generic routes 8 to produce synthetic generic routes 22. Each generic route 8 may include a date of the route, a time at each specific position, a mode of transportation, and/or general information about the subject, such as demographic information about the person making the trip. This auxiliary information can be directly mapped or transferred to the generic route 8 used for training from the corresponding specific route 3 or the corresponding specific position 4 respectively. Together with the sequence of generic positions 10, also the auxiliary information of the generic routes 8 is provided to the first machine learning model 18 for training to produce synthetic auxiliary information. The temporal resolution of the sequence may be used either at the full available resolution, or sampled down to fewer time steps per sequence.

Fig. 13 shows a method for training a second machine learning model 24. The method comprises receiving 38 a training data set 1, applying a mapping 39 to at least parts of the training data, and training 40 the second machine learning model 24 using the results 41 from the mapping 39. The training data set 1 and the mapping 39 is similar to the method described in connection with fig. 12 and it is referred to the above detailed description in this regard. The second machine learning model 24 is a sequence-to-sequence model, in particular a translation model. This model 24 is trained with the generic routes 8 as input sequences and the corresponding specific routes 3 as output sequences.

The second machine learning model 24 (e.g. sequence-to-sequence model) can be trained independently from the first machine learning model 18 (e.g. sequence generation model) that is used to generate the cluster-level sequences, i.e. the synthetic generic routes 22. It is a separate model specialized for the task of mapping low-resolution paths to high-resolution paths. This makes it easier for the models 18 and 24 to learn two equally important but complementary parts of the information in the data to be synthesized: what the general directions and trajectories are on a high level (e.g. from area A to area B, via area C), and then what precise paths would be taken to make these trips (e.g. following street X, then taking a turn into street Y, etc.).

The methods of fig. 12 in fig. 13 can advantageously be combined according to a further embodiment of the present disclosure. In this instance, the same training data set 1 and the same plurality 17 of generic routes 8 are used for training the first machine learning model 18 and the second machine learning model 24.

In fig. 14, a synthetic generic route 22 (here: a "cluster-level trip") is represented as a sequence of circles 42, representing the clusters 15 that are traversed in a particular order. This defines the "intention" of the synthetic subject taking the trip, to travel from a particular area on the map to a particular other area on the map. The lines 43 and 44 then represent two possible "translations" (red and blue) of the synthetic generic route 22 into synthetic specific routes 27 (i.e. fine grained trips) at the level of individual specific and potentially unique locations. The synthetic specific positions 28 along these synthetic specific routes 27 can deviate significantly from the synthetic generic positions 23 (e.g. the cluster center locations), for example in the case of the large circle 45 at the bottom of the picture to the Northwest of Northborough, where both the red line 43 and blue line 44 place the synthetic specific position 28 at this time step on the main road to the north of the cluster center, as this is the most likely route to be taken towards the next cluster-level location.

An example for a complete data set is illustrated in figures 15 and 16. This example shows 200 original/actual specific routes 3 (fig. 15) and 200 synthetic specific routes 27 (fig. 16) generated using the method of the present disclosure. It is noteworthy how the two- (or generally multi-) stage/step generation process, with first the coarse and then the fine granularity, help to create a synthetic data set 46 that is both similar to the original training data set 1 in the general distribution of areas visited, as well as in the paths taken.

## Claims

1. A computer-implemented method for training a first machine learning model (18) comprising:
receiving (34) a training data set (1) comprising a plurality (16) of specific routes (3), each specific route (3) comprising an ordered sequence of specific positions (4),
mapping (35) the plurality (16) of specific routes (3) to a corresponding plurality (17) of generic routes (8), wherein each specific position (4) is mapped to a representation having a coarser granularity forming a corresponding generic position (10),
training (36) the first machine learning model (18), which is a sequential generative model, with the plurality (17) of generic routes (8).

2. The method according to claim 1, wherein at least one specific route (3) and/or at least one specific position (4) comprises auxiliary information including one or more from a group comprising a date of the route, a time at one or more specific positions and a mode of transportation, wherein the method comprises directly mapping the auxiliary information to the corresponding generic route (8) and/or the corresponding generic position (10) respectively and using it for the training (36) of the first machine learning model (18).

3. A computer-implemented method for training a second machine learning model (24) comprising:
receiving (38) a training data set (1) comprising a plurality (16) of specific routes (3), each specific route (3) comprising an ordered sequence of specific positions (4),
mapping the plurality (16) of specific routes (3) to a corresponding plurality (17) of generic routes (8), wherein each specific position (4) is mapped to a representation having a coarser granularity forming a corresponding generic position (10),
training (40) the second machine learning model (24), which is a sequence-to-sequence model, with the generic routes (8) as input sequences and the corresponding specific routes (3) as output sequences.

4. The method according to claim 3, wherein the sequence-to-sequence model is a translation model.

5. A method comprising the method of claim 1 or 2 and the method of claim 3 or 4 wherein the same training data set (1) and the same plurality (17) of generic routes (8) are used for training (36, 40) the first machine learning model (18) and the second machine learning model (24).

6. The method according to any one of claims 1 to 5, wherein the representation for mapping (36) specific positions (4) to generic positions (10) uses hierarchical binning.

7. The method according to any one of claims 1 to 5, wherein the representation for mapping (36) specific positions (4) to generic positions (10) uses clustering the specific positions (4) .

8. A computer-implemented method for synthesizing mobility traces comprising:
generating a plurality (29) of synthetic generic routes (22), each synthetic generic route (22) comprising an ordered sequence of synthetic generic positions (23), and
generating a plurality (30) of synthetic specific routes (27) using the plurality (29) of synthetic generic routes (22),
wherein each synthetic specific route (27) corresponds to a synthetic generic route (22) and comprises a corresponding ordered sequence of synthetic specific positions (28),
wherein the synthetic specific positions (28) have a finer granularity than the synthetic generic positions (23).

9. The method according to claim 8, wherein generating the plurality (30) of synthetic specific routes (27) using the plurality (29) of synthetic generic routes (22) comprises:
generating a plurality of synthetic intermediary routes (31) using the plurality (29) of synthetic generic routes (22), and
generating the plurality (30) of synthetic specific routes (27) using the plurality of synthetic intermediary routes (31),
wherein each synthetic intermediary route (31) corresponds to a synthetic generic route (22) and comprises a corresponding ordered sequence of synthetic intermediary positions (32),
wherein the synthetic intermediary positions (32) of the synthetic intermediary routes (31) have a finer granularity than the synthetic generic positions (23) and a coarser granularity than the synthetic specific positions (28).

10. The method according to claim 8 or 9, wherein generating the plurality (29) of synthetic generic routes (22) is performed using a first trained machine learning model (18), which is a sequential generative model.

11. The method according to any one of claims 8 to 10, wherein generating the plurality (29) of synthetic generic routes (22) comprises generating synthetic auxiliary information in association with at least one synthetic generic route (22) and/or with at least one synthetic generic position (23), the synthetic auxiliary information including one or more from a group comprising a date of the route, a time at a synthetic generic position and a mode of transportation, wherein the method comprises directly mapping the synthetic auxiliary information to the corresponding synthetic specific route (27) and/or the corresponding synthetic specific position (28) respectively.

12. The method according to any one of claims 8 to 11, wherein generating the plurality (30) of synthetic specific routes (27) is performed using a second trained machine learning model (24), which is a sequence-to-sequence model.

13. A data processing apparatus comprising means for carrying out the steps of the method of any one of claims 1 to 12.

14. A computer program comprising instructions to cause the data processing apparatus of claim 13 to execute the steps of the method of any one of claims 1 to 12.

15. A computer-readable medium having stored thereon the computer program of claim 14.

## Amended claims

### Amended claims in accordance with Rule 137(2) EPC.

1. A computer-implemented method for training a second machine learning model (24) comprising:
receiving (38) a training data set (1) comprising a plurality (16) of specific routes (3), each specific route (3) comprising an ordered sequence of specific positions (4) and corresponding to an actual mobility trace of an actual subject, wherein the specific positions (4) are recorded or measured positions captured during an actual movement of that subject,
mapping the plurality (16) of specific routes (3) to a corresponding plurality (17) of generic routes (8), wherein each specific position (4) is mapped to a representation having a coarser granularity forming a corresponding generic position (10) ,
training (40) the second machine learning model (24), which is a sequence-to-sequence model, with the generic routes (8) as input sequences and the corresponding specific routes (3) as output sequences.

2. The method according to claim 1, wherein the sequence-to-sequence model is a translation model.

3. The method according to claim 1 or 2, wherein the same training data set (1) and the same plurality (17) of generic routes (8) are used for training (36, 40) the second machine learning model (24) and for training a first machine learning model (18), wherein the training of the first machine learning model (18) comprises:
training (36) the first machine learning model (18), which is a sequential generative model, with the plurality (17) of generic routes (8).

4. The method according to claim 3, wherein at least one specific route (3) and/or at least one specific position (4) comprises auxiliary information including one or more from a group comprising a date of the route, a time at one or more specific positions and a mode of transportation, wherein the method comprises directly mapping the auxiliary information to the corresponding generic route (8) and/or the corresponding generic position (10) respectively and using it for the training (36) of the first machine learning model (18).

5. The method according to any one of claims 1 to 4, wherein the representation for mapping (36) specific positions (4) to generic positions (10) uses hierarchical binning.

6. The method according to any one of claims 1 to 4, wherein the representation for mapping (36) specific positions (4) to generic positions (10) uses clustering the specific positions (4) .

7. A computer-implemented method for synthesizing mobility traces comprising:
generating a plurality (29) of synthetic generic routes (22), each synthetic generic route (22) comprising an ordered sequence of synthetic generic positions (23), and
generating a plurality (30) of synthetic specific routes (27) using the plurality (29) of synthetic generic routes (22),
wherein each synthetic specific route (27) corresponds to a synthetic generic route (22) and comprises a corresponding ordered sequence of synthetic specific positions (28),
wherein the synthetic specific positions (28) have a finer granularity than the synthetic generic positions (23), wherein generating the plurality (30) of synthetic specific routes (27) is performed using a second trained machine learning model (24), which is a sequence-to-sequence model trained on actual mobility traces of actual subjects.

8. The method according to claim 7, wherein generating the plurality (30) of synthetic specific routes (27) using the plurality (29) of synthetic generic routes (22) comprises:
generating a plurality of synthetic intermediary routes (31) using the plurality (29) of synthetic generic routes (22), and
generating the plurality (30) of synthetic specific routes (27) using the plurality of synthetic intermediary routes (31),
wherein each synthetic intermediary route (31) corresponds to a synthetic generic route (22) and comprises a corresponding ordered sequence of synthetic intermediary positions (32),
wherein the synthetic intermediary positions (32) of the synthetic intermediary routes (31) have a finer granularity than the synthetic generic positions (23) and a coarser granularity than the synthetic specific positions (28).

9. The method according to claim 7 or 8, wherein generating the plurality (29) of synthetic generic routes (22) is performed using a first trained machine learning model (18), which is a sequential generative model.

10. The method according to any one of claims 7 to 9, wherein generating the plurality (29) of synthetic generic routes (22) comprises generating synthetic auxiliary information in association with at least one synthetic generic route (22) and/or with at least one synthetic generic position (23), the synthetic auxiliary information including one or more from a group comprising a date of the route, a time at a synthetic generic position and a mode of transportation, wherein the method comprises directly mapping the synthetic auxiliary information to the corresponding synthetic specific route (27) and/or the corresponding synthetic specific position (28) respectively.

11. A data processing apparatus comprising means for carrying out the steps of the method of any one of claims 1 to 10.

12. A computer program comprising instructions to cause the data processing apparatus of claim 11 to execute the steps of the method of any one of claims 1 to 10.

13. A computer-readable medium having stored thereon the computer program of claim 12.
